# EUROPEAN PATENT APPLICATION

(11) **EP 4 640 852 A1**
(43) Date of publication of application: **29.10.2025**
(21) Application number: 23907334.9
(22) Date of filing: 11.10.2023
(51) Int. Cl.: C21D 8/12, C21D 10/00, H01S 3/03, H01S 3/06, C21D 9/46, H01F 1/147

(54) **GRAIN-ORIENTED ELECTRICAL STEEL SHEET AND MANUFACTURING METHOD FOR SAME**

(30) Priority: 21.12.2022 KR 20220181063
(71) Applicant: POSCO Co., Ltd, Pohang-si, Gyeongsangbuk-do 37859 (KR)
(72) Inventor: KWON, Ohyeoul, Pohang-si, Gyeongsangbuk-do 37859 (KR); KIM, Changho, Pohang-si, Gyeongsangbuk-do 37859 (KR); HUH, Byungkook, Pohang-si, Gyeongsangbuk-do 37859 (KR); SONG, Jaehwa, Pohang-si, Gyeongsangbuk-do 37859 (KR)
(74) Representative: Meissner Bolte Partnerschaft mbB
(86) International application number: PCT/KR2023/015568
(87) International publication number: WO 2024/136048

(57) **Abstract**

A grain-oriented electrical steel sheet according to an embodiment of the present disclosure includes: an electrical steel sheet substrate, and an insulating coating layer disposed on the electrical steel sheet substrate, wherein at least one linear deformed portion is disposed on a surface of the insulating coating layer, a re-solidification layer is formed on a position of one of front and rear boundaries of the deformed portion, and P-concentration in the re-solidification layer is lower than P-concentration of a lower insulating coating layer on which a re-solidification layer is not formed in a thickness direction of the insulating coating layer.

## Description

### BACKGROUND OF THE INVENTION

### (a) Field of the Invention

The present disclosure relates to a grain-oriented electrical steel sheet and a manufacturing method thereof. More specifically, the present disclosure relates to a method for manufacturing a grain-oriented electrical steel sheet having excellent iron loss and coercive force while simultaneously preventing surface damage by irradiating overlapping laser beams having different wavelengths on a surface of an electrical steel sheet on which secondary recrystallization has been performed.

### (b) Description of the Related Art

Grain-oriented electrical steel sheets have excellent magnetic characteristics and are used as iron core materials for transformers. The grain-oriented electrical steel sheets undergo a unique rolling and annealing process of an electrical steel sheet manufacturing process to form Goss texture recrystallized in an orientation of {110} <001> in the entire steel sheet.

To respond to climate changes, the world is strengthening standards for estimating the emission of greenhouse gas day by day. In the case of an iron core of a transformer, factors affecting the standards for estimating the emission of greenhouse gas relate to the improvement in efficiency when using electrical steel sheets. The efficiency of the iron core of a transformer is affected by the iron loss of the electrical steel sheet, magnetic flux density, and coercive force, that is, magnetic characteristics.

The magnetic flux density of the electrical steel sheet may be substantially influenced by a process for manufacturing an electrical steel sheet as the higher the degree to which crystal axes that are easy to magnetize are gathered in the crystal structure, that is, crystal orientation becomes, the higher the magnetic flux density increases.

Regarding the iron loss of the electrical steel sheet, the value of W17/50 [W/kg] measured when a magnetic field with a frequency of 50 Hz is applied at a maximum magnetic flux density of 1.7 T is referred to as a guaranteed iron loss value of the iron core material, and this value is a measure of the iron loss of the electrical steel sheet. However, when designing the transformer, the of value W15/50 [W/kg] measured when the magnetic field with the frequency of 50 Hz is applied at the maximum magnetic flux density of 1.5 T which is lower than the above-noted value, is sometimes used. The efficiency of the transformer is evaluated as better when an iron loss value of designing the transformer is lowered.

Therefore, in the case of the electrical steel sheet, the higher the magnetic flux density and the lower the iron loss of the steel sheet, the more efficient it may be used as an excellent iron core of the transformer. Among them, the iron loss is evaluated as a more important indicator because the process technology for securing high magnetic flux density through upward standardization of the process for manufacturing an electrical steel sheets has been developed to the extent that it may support the efficiency of transformers.

This iron loss is divided into eddy current loss and hysteresis loss, and the hysteresis loss tends to decrease when the magnetic flux density increases, so the eddy current loss occupies an important position in controlling the entire iron loss in the grain-oriented electrical steel sheets. Among the iron losses, the eddy current loss is divided into classical eddy current loss and abnormal eddy current loss, and the classical eddy current loss is proportional to the thickness of the steel sheet, so the thinner the steel sheet, the less the classical eddy current loss. Therefore, controlling the abnormal eddy current loss is becoming an important technology for reducing the iron loss.

The eddy current loss is reduced as a space between magnetic domain walls of the 180°-magnetic domain, which is the magnetic domain in a rolling direction, becomes narrower, so the iron loss may be reduced by refining the magnetic domain of the electrical steel sheet

Refining the magnetic domain in the electrical steel sheet represents a process for applying physical stimuli to crystal particles having a magnetic domain characteristic to separate the same into multiple magnetic domains and refining them. Methods for refining the magnetic domain may include laser irradiation, electron beam irradiation, plasma treatment, etching, or roll pressing. Depending on whether the magnetic domain refining effect is maintained when performing the magnetic domain refinement and performing stress relief annealing (SRA), it is divided into permanent magnetic domain refinement and temporary magnetic domain refinement.

In general, the temporary magnetic domain refining method uses various means such as laser beams to reduce the width of the 180°-magnetic domain formed from a magnetic domain refined surface of the steel sheet to an opposite magnetic domain non-refined surface. When a width of the 180°-magnetic domain is reduced and a magnetic field is applied to the steel sheet from an outside as described, a distance of moving the magnetic domain is reduced and residual tensile stress in the rolling direction is increased, thereby improving the magnetic characteristics.

To reduce the width of the 180°-magnetic domain of the steel sheet using laser beams, a laser output (or energy density) must be increased to increase the energy density of the laser beams per unit area. Another method is to increase a duration time per unit length by reducing a diameter of a final beam such as laser beams and increasing its length. However, when energy such as laser beams is input on the surface of the steel sheet to refine the width of the 180°-magnetic domain during the temporary magnetic domain refining process, the surface of the steel sheet may be damaged.

To implement the temporary magnetic domain refinement, attempts to minimize damages to the surface on which laser beams are irradiated, increase magnetic flux density, and substantially improve the iron loss value (W15/50) of designing the transformer are made, but the surface of the steel sheet is damaged during the process for refining a temporary magnetic domain, so corrosion resistance of the steel sheet deteriorates.

### SUMMARY OF THE INVENTION

The present disclosure attempts to provide a grain-oriented electrical steel sheet and a manufacturing method thereof. The present disclosure attempts to provide a method for manufacturing a grain-oriented electrical steel sheet for preventing surface damage by irradiating overlapping laser beams with different wavelengths on a surface of an electrical steel sheet on which secondary recrystallization is performed, and having excellent transformer designing iron loss values and coercive force characteristics.

An embodiment of the present disclosure provides a grain-oriented electrical steel sheet including: an electrical steel sheet substrate; and an insulating coating layer disposed on the electrical steel sheet substrate, wherein at least one linear deformed portion is disposed on a surface of the insulating coating layer, a re-solidification layer is formed on a position of one of front and rear boundaries of the deformed portion, and P-concentration in the re-solidification layer is lower than P-concentration of a lower insulating coating layer on which a re-solidification layer is not formed in a thickness direction of the insulating coating layer.

A position where P-concentration of the re-solidification layer starts being reduced may be disposed by equal to or less than 15% of a thickness of an entire insulating coating layer from a surface of the insulating coating layer in a thickness direction of the insulating coating layer.

The position where P-concentration of the re-solidification layer starts being reduced is disposed by equal to or less than 500 nm from a surface of the insulating coating layer in a thickness direction of the insulating coating layer.

A width of a boundary where the re-solidification layer is formed may be formed to be equal to or less than 10 µm on one of a front portion and a rear portion with respect to respective ends of the deformed portion.

A glass coating layer may be further formed between the electrical steel sheet substrate and the insulating coating layer.

An iron loss (or a magnetic domain material of W15/50) improvement rate of the electrical steel sheet may be equal to or greater than 7 %, and a coercive force improvement rate of the electrical steel sheet is equal to or greater than 11%.

Another embodiment of the present disclosure provides a grain-oriented electrical steel sheet including: an electrical steel sheet substrate; and an insulating coating layer disposed on the electrical steel sheet substrate, wherein at least one linear deformed portion is disposed on a surface of the insulating coating layer, a re-solidification layer is formed on a position of one of upper and lower boundaries of the deformed portion, and Si-concentration in the re-solidification layer is higher than Si-concentration of a lower insulating coating layer on which a re-solidification layer is not formed in a thickness direction of the insulating coating layer.

P-concentration in the re-solidification layer may be lower than P-concentration of a lower insulating coating layer on which a re-solidification layer is not formed.

A position where P and Si-concentration of the re-solidification layer starts being changed may be equal to or less than 15% of a thickness of an entire insulating coating layer from a surface of the insulating coating layer in a thickness direction of the insulating coating layer.

An iron loss (W15/50) improvement rate of the electrical steel sheet may be equal to or greater than 7 %, and a coercive force improvement rate of the electrical steel sheet may be equal to or greater than 11%.

Another embodiment of the present disclosure provides a method for refining a magnetic domain of a grain-oriented electrical steel sheet including: a first beam spot formed by irradiating first laser beams with a first wavelength; and a second beam spot formed by irradiating second laser beams with a second wavelength, wherein overlapping laser beams formed to control a width of the second beam spot to be disposed within a width of the first beam spot on a surface of an electrical steel sheet with respect to a progressing direction of the electrical steel sheet are irradiated on the surface of the electrical steel sheet to form a deformed portion.

The first laser beams may be laser beams of CO₂, and the second laser beams may be disk laser beams.

The disk laser beams that is the second laser beams may be longer or shorter than the laser beam of CO₂ that is the first laser beams with respect to the width direction of the electrical steel sheet.

The laser beam of CO₂ that is the first laser beams and the disk laser beams that is the second laser beams may be irradiated by a laser beam scanning device through a shared optical path.

The laser beam of CO₂ that is the first laser beams and the disk laser beams that is the second laser beams may be respectively scanned by a laser beam scanning device, and the laser beams overlap each other on a surface of the electrical steel sheet.

A beam spot of the laser beams of CO₂ that is the first laser beams may be an oval beam spot that has a width of 100 to 400 µm and a length of 0.4 to 20 mm.

A beam spot of the disk laser beams that is the second laser beams may be an oval or circular beam spot which has a width of 10 to 200 µm and a length of equal to or less/greater than the length of the beam spot of the laser beams of CO₂ that is the first laser beams.

Irradiation intervals of the overlapping laser beams may be 2 to 7 mm, and scan speeds thereof may be 1 to 300 m/sec.

An inclined direction of the overlapping laser beams may be equal to or less than ±10°.

Outputs of the laser beams of CO₂ that is the first laser beams may be 200 to 2,000 W, and outputs of the disk laser beams that is the second laser beams may be 10 to 550 W.

According to an embodiment of the present disclosure, magnetism may be further improved and damage to the surface of the steel sheet may be sufficiently suppressed by performing optimal magnetic domain refinement using overlapping laser beams with different wavelengths.

According to another embodiment of the present disclosure, it may be possible to easily achieve high power of average outputs by using long wavelength laser beams, and ensuring reliability of the processing line, and to effectively improve magnetism by irradiating short wavelength laser beams and forming a minimum magnetic domain.

The magnetic domain refining method according to an embodiment of the present disclosure may use CO₂ laser beams as long wavelength laser beams to stably preheat the steel sheet without destroying the insulating coating layer, and may use a disk laser as short wavelength laser beams to induce residual stress due to thermal elastic deformation of the steel sheet with a width exactly necessary for forming a reflux magnetic domain, thereby enabling accurate magnetic domain refinement.

The magnetic domain refining method according to another embodiment of the present disclosure may irradiate laser beams with different wavelengths overlapping each other on the surface of the steel sheet on which secondary recrystallization has been completed, thereby maximizing the heat impact in the thickness direction under the low laser beam output condition, and providing the grain-oriented magnetic domain refined product with excellent low magnetic field iron loss.

### BRIEF DESCRIPTION OF THE DRAWINGS

FIG. 1A shows a photograph on a surface of a steel sheet taken by an electron microscope when performing a magnetic domain refinement with overlapping laser beams according to an embodiment of the present disclosure.
FIG. 1B shows a photograph of FIB-TEM taken by enlarging a cross-section of a steel sheet at a portion G1 in a thickness direction on a surface of the steel sheet in FIG. 1A.
FIG. 2 shows a graph on changes of components in a thickness direction of a steel sheet analyzed with respect to lines T1 and T2 in the FIB-TEM of FIG. 1B.
FIG. 3 shows a schematic view on changes of major components in the graph of FIG. 2.
FIG. 4 shows a schematic view when beam spots of overlapping laser beams with different wavelengths are scanned on a steel sheet according to an embodiment of the present disclosure.
FIG. 5 shows a schematic view when beam spots of overlapping laser beams with different wavelengths are scanned on a surface of a steel sheet according to an embodiment of the present disclosure.
FIG. 6 shows a schematic view when beam spots of overlapping laser beams with different wavelengths are scanned on a surface of a steel sheet according to another embodiment of the present disclosure.
FIG. 7 shows a schematic view on energy density when beam spots of overlapping laser beams with different wavelengths are scanned on a surface of a steel sheet according to an embodiment of the present disclosure.

### DETAILED DESCRIPTION OF THE EMBODIMENTS

It will be understood that, although the terms first, second, third, etc. may be used herein to describe various elements, components, regions, layers, and/or sections, they are not limited thereto. These terms are only used to distinguish one element, component, region, layer, or section from another element, component, region, layer, or section. Thus, a first element, component, region, layer, or section discussed below could be termed a second element, component, region, layer, or section without departing from the teachings of the present disclosure.

The technical terms used herein are to simply mention a particular embodiment and are not meant to limit the present disclosure. An expression used in the singular encompasses an expression of the plural, unless it has a clearly different meaning in the context. In the specification, it is to be understood that terms such as "including", "having", etc., are intended to indicate the existence of specific features, regions, numbers, stages, operations, elements, components, or combinations thereof disclosed in the specification, and are not intended to preclude the possibility that one or more other specific features, regions, numbers, operations, elements, components, or combinations thereof may exist or may be added.

When a part is referred to as being "on" another part, it may be directly on the other part or intervening parts may also be present. In contrast, when an element is referred to as being "directly on" another element, there are no intervening elements therebetween.

Unless otherwise defined, all terms used herein, including technical or scientific terms, have the same meanings as those generally understood by those with ordinary knowledge in the field of art to which the present disclosure belongs. Such terms as those defined in a generally used dictionary are to be interpreted to have the same meanings as contextual meanings in the relevant field of art, and are not to be interpreted to have idealized or excessively formal meanings unless clearly defined in the present application.

Embodiments of the present disclosure will now be described in detail so that those skilled in the art to which the present disclosure pertains may easily implement the embodiments. As those skilled in the art would realize, the described embodiments may be modified in various different ways, all without departing from the spirit or scope of the present disclosure.

An embodiment of the present disclosure provides a grain-oriented electrical steel sheet including an electrical steel sheet substrate, and an insulating coating layer disposed on the electrical steel sheet substrate, and at least one linearly deformed portion exists on a surface of the insulating coating layer, a re-solidification layer is formed at one of front and rear boundaries of the deformed portion, and P-concentration in the re-solidification layer of the insulating coating layer is formed to be lower than P-concentration in a lower insulating coating layer on which the re-solidification layer is not formed in the thickness direction.

**It** is preferable that the electrical steel sheet material is an electrical steel sheet that has undergone final annealing according to the process for manufacturing a grain-oriented electrical steel sheet, so that GOSS texture is formed in the steel sheet and secondary recrystallization is completed.

An insulating coating layer is formed on the electrical steel sheet substrate. A glass coating layer may be further formed between the electrical steel sheet substrate and the insulating coating layer.

The insulating coating layer includes phosphate and colloidal silica as primary components, and the glass coating layer includes forsterite as a primary component. The primary component is phosphate in the insulating coating layer, which includes 0.1 g/m² or more as a reference for the single-sided coating amount on the surface of the steel sheet, and is colloidal silica in the insulating coating layer, which includes 0.1 g/m² or more as a reference for the single-sided coating amount on the surface of the steel sheet. It is forsterite in the glass coating layer which it includes 0.7 g/m² or more of oxygen on the single-sided coating amount on the surface of the steel sheet.

In an embodiment of the present disclosure, at least one linear deformed portion exists on the surface of the insulating coating layer.

In an embodiment of the present disclosure, the deformed portion on a line includes not only a solid line but also a line that continues discontinuously, such as a dotted line or a broken line, and also includes a zigzag shape when viewed microscopically but a straight line when viewed macroscopically, and includes all deformed portions that form substantially a linear shape.

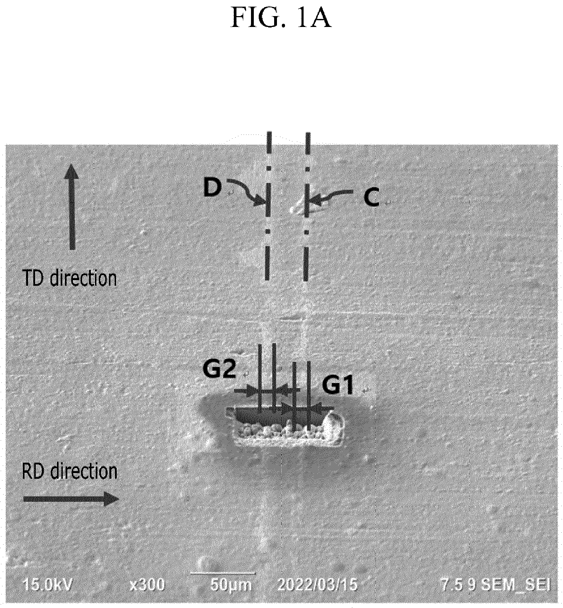

As shown in FIG. 1A, the deformed portion is formed in the region between C and D in FIG. 1A, and is formed linearly along the direction perpendicular to the rolling direction of the electrical steel sheet (or **TD** direction) on the surface of the electrical steel sheet.

Referring to FIG. 1A, the line C indicates an end of the deformed portion formed in front of the rolling direction of the steel sheet when the overlapping laser beams described later are irradiated on the surface of the steel sheet, and line D indicates a rear end of the deformed portion. The C line and the D line may be formed along the lines in which the overlapping laser beams are scanned and may form the boundaries of the deformed portion. Referring to FIG. 1A, G1 and G2 represent predetermined regions forming boundaries in the range of ± 5 to 10 µm with respect to the C line and the D line, respectively. G1 also represents the front region in the steel sheet rolling progressing direction, and G2 represents the rear region in the steel sheet rolling progressing direction.

The linear deformed portion formed on the surface of the electrical steel sheet is formed by irradiating overlapping laser beams with different wavelengths in the direction perpendicular to the rolling direction of the electrical steel sheet (or TD direction). When the overlapping laser beams are input on the surface of the steel sheet, the overlapping laser beams are simultaneously irradiated not only on the electrical steel sheet but also on an insulating film formed on an upper portion of the steel sheet or on a glass coating film and the insulating film in the thickness direction of the electrical steel sheet so that the material is deformed into a material state that is different from a material that is before the case when the overlapping laser beams are irradiated.

The deformation of the electrical steel sheet, which is formed in the thickness direction of the electrical steel sheet, occurs when a strong compressive stress area is formed in a crystal structure of the steel sheet disposed below the insulating coating layer due to the incident overlapping laser beams. When a compressive stress zone is formed on the electrical steel sheet, a lancet magnetic domain (or a reflux magnetic domain) is formed to reduce magnetoelastic energy. As a result, a 180°-magnetic domain is formed in the steel sheet portion affected by the overlapping laser beams, and a 90°-magnetic domain is formed in the thickness direction of the steel sheet to reduce magnetoelastic energy, thereby narrowing the gap between the magnetic domains and refining the magnetic domains. When the magnetic domain of the electrical steel sheet is refined by the overlapping laser beams, the abnormal eddy current loss of the steel sheet is reduced as a result.

When the overlapping laser beams are irradiated on the surface of the electrical steel sheet, residual stress according to thermal elastic deformation may be induced in the thickness direction of the electrical steel sheet by a width of the overlapping laser beams, enabling accurate magnetic domain refinement. The width of the overlapping laser beams is almost similar to the region between C and D in FIG. 1A.

When the overlapping laser beams are irradiated onto the upper portion of the electrical steel sheet to form a deformed portion on the steel sheet, a deformed portion is also formed on the upper portion of the steel sheet, that is, on the surface of the insulating coating layer directly hit by the overlapping laser beams. The deformed portion (or the region between C and D) of the insulating coating layer may be formed along the trajectory of the overlapping laser beams, and may form a concave groove shape by shrinking due to evaporation of some component elements constituting the insulating coating layer. The depth of the groove may be controlled by adjusting the energy density of the incident overlapping laser beams.

A re-solidification layer may be formed in the thickness direction of the insulating coating layer at the boundary of the deformed portion formed on the surface of the insulating coating layer (G1 and G2 of FIG. 1A). The re-solidification layer of the insulating coating layer is formed by partial fusion of the insulating coating layer by irradiation of overlapping laser beams and then immediate re-solidification.

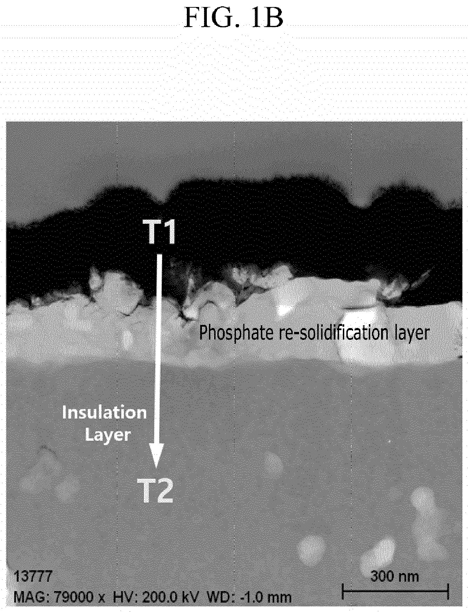

As shown in FIG. 1B, the re-solidification layer formed at the boundary of the deformed portion of the insulating coating layer may be formed along the lines C and D of FIG. 1A in the area in which the overlapping laser beams are directly irradiated, and the re-solidification layer may appear in a linear form intermittently or continuously along the trajectory along which the overlapping laser beams are injected. It is preferable that the width of the boundary where the re-solidification layer is formed may be in the range of 10 µm or less with respect to the lines C and D, which are the ends of the deformed portion.

It is estimated that the re-solidification layer of the insulating coating layer is formed when the overlapping laser beams are irradiated on the surface of the steel sheet on which an insulating film is formed, and some of the phosphate forming the insulating coating layer is fused by the overlapping laser beams and is solidified immediately after the overlapping laser beams pass. Therefore, this re-solidification layer is also referred to as a phosphate re-solidification layer.

The formation of re-solidification layer in the insulating coating layer is not generated when each laser beam constituting the overlapping laser beams is irradiated independently.

When the overlapping laser beams are irradiated, the reason why the re-solidification layer of the insulating coating layer mainly appears at the boundary of the region irradiated with the overlapping laser beams is that a vaporization point of phosphate, which constitutes the insulating film, is low, so when the overlapping laser beams are irradiated, it is presumed that phosphorus vaporizes first and the silicon oxides made of Si and O are re-solidified into an amorphous state.

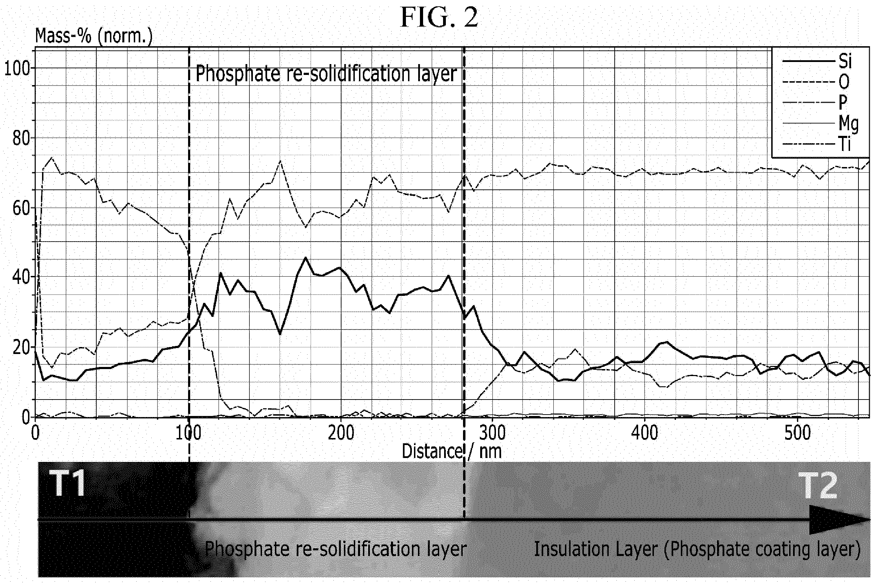

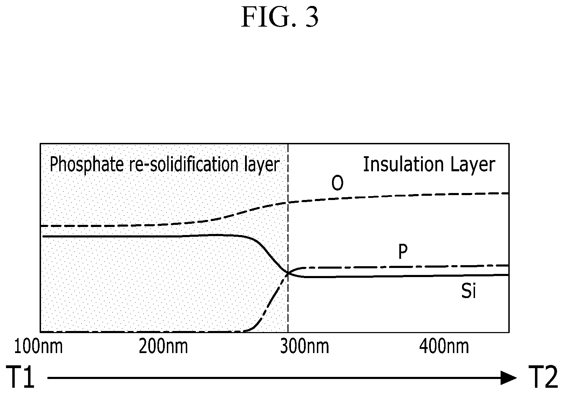

When a re-solidification layer is formed in the insulating coating layer due to irradiation of the overlapping laser beams, changes in the components configuring the insulating coating layer are generated in the thickness direction of the insulating coating layer (in the direction from of T1 to T2), as shown in FIG. 2 and FIG. 3.

That is, phosphorus (P) is vaporized, and the concentration of phosphorus (P) in the re-solidification layer decreases in the area where the re-solidification layer is formed, i.e., the boundary where the overlapping laser beams are irradiated. However, the P-concentration of the lower insulating coating layer, where the overlapping laser beams are irradiated but the depth is so deep that the re-solidification layer is not formed, is shown to be higher than the concentration of phosphorus (P) in the re-solidification layer.

Therefore, the P-concentration of the portion of the insulating coating layer where the re-solidification layer is formed by irradiation of the overlapping laser beams is shown to be lower than the P-concentration of the lower insulating coating layer where the re-solidification layer is not formed.

Unlike the change in the concentration of phosphorus (P) in the re-solidification layer, the concentration of silicon (Si) in the re-solidification layer is shown to be higher than the concentration of silicon (Si) in the lower insulating coating layer where the re-solidification layer is not formed. This is presumed to be because the silicon oxides made of Si and O in the re-solidification layer are re-solidified into an amorphous state by irradiation of overlapping laser beams.

The changes in the concentration of phosphorus (P) and silicon (Si) in this re-solidification layer are shown in FIG. 2 and FIG. 3.

When the re-solidification layer of the insulating coating layer is formed by irradiation of overlapping laser beams, the silicon oxide in the re-solidification layer solidifies into an amorphous state to form a re-solidification layer, and the corrosion characteristics of the re-solidification layer are improved due to the inherent characteristics of the amorphous material.

The thickness of the re-solidification layer of the insulating coating layer formed by irradiating the overlapping laser beams on the surface of the steel sheet is preferably within 15% of the average cross-section thickness of the entire insulating coating layer with respect to a non-deformed portion (or a nonirradiated surface of the overlapping laser beams).

When the thickness of the re-solidification layer formed on the insulating coating layer becomes larger than 15% of the average cross-section thickness of the insulating coating layer that has not been irradiated with the overlapping laser beams, the absolute thickness of the insulating coating layer becomes thinner, which may have a detrimental effect on corrosion resistance, and the tensile effect by the insulating coating layer may be reduced, resulting in inferior iron loss. Therefore, it is preferable to limit it to this range.

When the re-solidification layer is formed on the insulating coating layer in this way, the properties of the insulating coating layer may change so that the insulating coating layer becomes stable and does not partially peel off or become damaged. When the re-solidification layer is formed to be equal to or greater than 15% of the thickness of the insulating coating layer, it is not preferable because the insulating coating layer is damaged and the tensile effect by the insulating coating layer is lost.

When the re-solidification layer is formed in the insulating coating layer by irradiation of overlapping laser beams, the insulating coating layer may shrink due to the formation of the re-solidification layer, and the thickness of the insulating coating layer may change.

The portion where the change in the concentration of phosphorus (P) and silicon (Si) in the re-solidification layer begins is preferably equal to or less than 500 nm from the surface of the insulating coating layer in the thickness direction of the insulating coating layer with respect to the insulating coating layer that has not been irradiated with the overlapping laser beams. When the re-solidification layer is formed with the depth of 500 nm or more from the surface of the insulating coating layer, this is not preferable because the insulating coating layer is damaged and the tensile effect by the insulating coating layer is lost.

When forming one or more deformed portions by irradiating the overlapping laser beams on the surface of the electrical steel sheet, the iron loss improvement rate of W15/50 of such steel sheet is preferably 7% or more. When the iron loss improvement rate of W15/50 is equal to or less than 7%, the effect of reducing efficiency after designing the transformer is minimal.

When forming at least one deformed portion by irradiating the overlapping laser beams on the surface of the electrical steel sheet, it is preferable that the coercive force improvement rate of the steel sheet is 11% or more. When the coercive force improvement rate is equal to or less than 11%, the eddy current loss effect is not significant, so it is not preferable.

Another embodiment of the present disclosure provides a method for refining a magnetic domain of a grain-oriented electrical steel sheet for forming a deformed portion by irradiating a surface of a steel sheet with overlapping laser beams including a first beam spot formed by irradiating a first laser beam with a first wavelength and a second beam spot formed by irradiating a second laser beam with a second wavelength, wherein the width of the second beam spot is controlled to be disposed within the width of the first beam spot on the surface of the steel sheet with respect to the progressing direction of the electrical steel sheet.

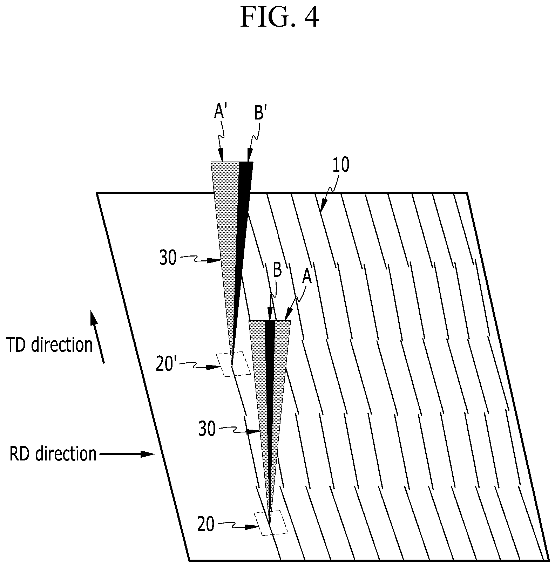

According to another embodiment of the present disclosure, a process for refining a magnetic domain of a grain-oriented electrical steel sheet includes forming a linear deformed portion 10 by irradiating the overlapping laser beams on the entire electrical steel sheet in a vertical or inclined direction of the rolling direction (RD direction) of the steel sheet, that is, the width direction (TD direction) of the steel sheet as shown in FIG. 4.

The formation of the deformed portion 10 in the steel sheet by laser beams represents the deformation of a crystal lattice that occurs due to thermal impact from irradiation of laser beams, and the crystal lattice is deformed during the process in which the steel sheet is locally rapidly heated by the laser beams and then is immediately cooled. The heating rate of the steel sheet is proportional to the energy density (or power density) of laser beams per unit hour.

However, the deformation of the crystal lattice due to thermal impact during irradiation of laser beams increases as the total laser irradiation energy increases so when energy exceeding the size required for refining a magnetic domain is irradiated to the steel sheet, a heat source exceeding that required for forming a reflux magnetic domain diffuses to the surroundings, increasing the magnetic deformation. Therefore, when laser beams are irradiated, the deformation of the crystal lattice due to thermal impact requires the lattice deformation energy that is necessary to form a reflux magnetic domain, and in order to suppress thermal diffusion, it is preferable to irradiate the laser incident energy to a narrow region for a short period of time.

An interaction condition between the laser beam and the steel sheet is affected by characteristics of the laser beams and an absorption rate of the laser beams for the steel sheet, and when the conditions for manufacturing the steel sheet are constant, the laser absorption rate is affected by the wavelength of the laser beams. That is, the laser absorption rate of the steel sheet is approximately 10% or less in the case of a long-wavelength laser beams of CO₂ (wavelength; 10.6 µm), and is 3 to 5 times higher than that of short-wavelength disk laser beams (wavelength; 1.03 µm) of CO₂.

However, the insulating coating layer formed on an upper portion of the steel sheet shows a large absorption for the long-wavelength laser beams of CO₂, unlike the steel sheet, but it absorbs relatively less laser beams for the short-wavelength disk laser beams.

Therefore, when the long-wavelength laser beams of CO₂ and the short-wavelength disk laser beams are used simultaneously and in an overlapping manner, the merits of respective laser beams applied to magnetic domain refinement are preferentially exerted without side effects, thereby generating a mutual synergistic effect.

That is, the long-wavelength laser beams of CO₂ may be used with high power ranging from hundreds of W to several kW or more as an average output depending on the steel sheet speeds, and may easily induce thermal elastic deformation in the irradiated portion of the steel sheet. The long-wavelength laser beams of CO₂ have a high absorption rate for insulating films made of phosphate and silica, so they may stably pass through the film layers. Therefore, the long-wavelength laser beams of CO₂ may stably induce thermal elastic deformation of the steel sheet without destroying the insulating coating layers, making it suitable for a type of preheating function.

The short-wavelength disk laser beams have a relatively high laser absorption rate for the steel sheet so it is possible to irradiate a narrow region with incident energy that is enough to induce residual stress due to lattice deformation and thermal elastic deformation exactly as necessary to form a reflux magnetic domain for a shorter period of time. The short-wavelength disk laser beams may suppress heat diffusion to the surroundings because their incident energy range is narrow, thereby minimizing unnecessary thermal deformation.

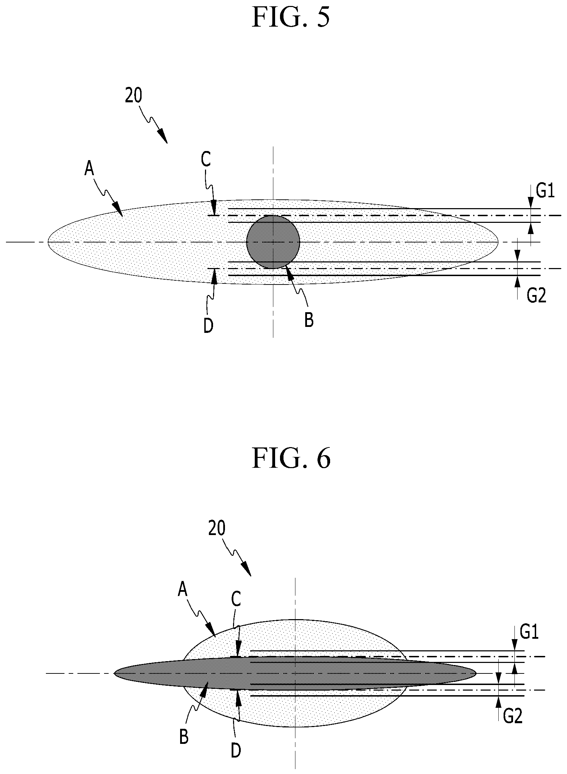

To simultaneously overlap the long-wavelength laser beams of CO₂ and the short-wavelength disk laser beams to achieve the characteristics of combining the overlapping laser beams with different wavelengths, it is preferable that the width of the disk laser beams B is disposed within the width of the laser beams of CO₂ A, as shown in FIG. 5 and FIG. 6.

That is, as shown in FIG. 5 and FIG. 6, the deformed portion is formed by causing lattice deformation and thermal elastic deformation as wide as the width of the short-wavelength disk laser beams B, while the width of the long-wavelength laser beams of CO₂ A may easily induce thermal elastic deformation through preheating in a wider region than the width of the disk laser beams B.

However, the lengths of the laser beams of CO₂ A and the disk laser beams B are different from the widths of the beams A and B. That is, one of the overlapping laser beams 20, that is, the laser beams of CO₂ A or the disk laser beams B may pass through a travel line and preheat the steel sheet in a traveling direction on the surface so the preheating function is possible when one of the laser beams configuring the overlapping laser beams passes through the same.

Therefore, as shown in FIG. 5, when the laser beams of CO₂ A are longer than the disk laser beams B, the laser beams of CO₂ A may first scan the surface of the steel sheet and perform a preheating function among the overlapping laser beams. Also, as shown in FIG. 6, when the disk laser beams B are longer than the laser beams of CO₂ A, the disk laser beams B may first scan the surface of the steel sheet to perform a preheating function.

Therefore, the disk laser beam (B) may be longer or shorter than the laser beams of CO₂ A.

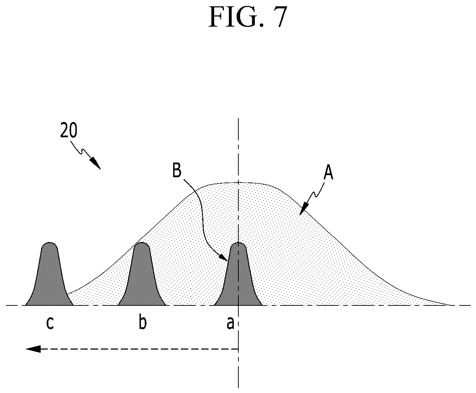

However, when the disk laser beams B are shorter than the laser beams of CO₂ A as in FIG. 7, it is preferable that the center of the disk laser beams B may be disposed at the position of "a" where the energy density of the disk laser beams B is high. When the disk laser beams B are longer than the laser beams of CO₂ A, the center of the disk laser beams B may be easily disposed at the position of "a" where the energy density of the disk laser beams B is high.

The method for forming overlapping laser beams represents a method for an optical system, in which a laser oscillator generates laser beams of CO₂ that is first laser beams and disk laser beams that is second laser beams and processes the laser beams, to share an optical path. The method for sharing an optical path includes forming overlapping laser beams 30 using two different laser beams through an optical path in the optical system as shown in FIG. 4, and irradiating the overlapping laser beams 20 onto the surface of the steel sheet.

Another method for forming overlapping laser beams is a method in which a laser oscillator generates laser beams of CO₂ A' that is first laser beams and disk laser beams B' that is second laser beams, and an optical system for processing laser beams uses unique optical paths. The method using the unique optical paths allows two different laser beams to arrive at the surface of the steel sheet through respective optical paths and irradiates overlapping laser beams 20' in the optical system as shown in FIG. 4.

The beam spot of the laser beams of CO₂, which is the first laser beams A and A' among the overlapping laser beams used in an embodiment of the present disclosure, is preferably an oval beam spot with the width (length in the "RD direction" in FIG. 4) of 100 to 400 µm and the length (length in the "TD direction" in FIG. 4) of 0.4 to 20 mm. The circular beam spot of the laser beams of CO₂ with a radius of 100 µm or more may also be used.

It is not preferable to form the width of the laser beams of CO₂ that is the first laser beams A to be within 100 µm because a mirror optical system becomes complicated like the disk laser beams, and when the width becomes greater than 400 µm, a heat effect in the length direction of the steel sheet increases, so the magnetic flux density deteriorates, which it is not preferable.

The beam spot of the disk laser beams, which is the second laser beams B and B' among the overlapping laser beams, has the width (length in the "RD direction" in FIG. 4) of 10 to 200 µm, and its length ("TD direction" length in FIG. 4) is less than or greater than the length of the beam spot of the laser beams of CO₂, which is the first laser beams A, and the shape of the beam spot is preferably oval or circular.

When the width of the beam spot of the disk laser beams is reduced to be less than 10 µm, energy density is concentrated in a narrow region, which may result in inferior magnetic flux density and iron loss, and there is a problem that the optical system structure becomes complicated. When the width of the beam spot of the disk laser beams becomes equal to or greater than 200 µm, the heat effect in the length direction of the steel sheet increases, this may cause deterioration of the magnetic flux density, and is not preferable.

Regarding a laser beam oscillation mode used in an embodiment of the present disclosure, it may be preferably for the first laser beams A and A' and the second laser beams B and B' to use continuous wave laser beams that continuously generate laser light, and pulse laser beams may also be used.

Also, the quality of the used laser beams including the first laser beams A and A' and the second laser beams B and B' is preferably the Gaussian mode of TEM 00, but a multi transverse mode of TEM0i may also be used.

The overlapping laser beams 20 and 20' irradiated on the surface of the steel sheet may minimize the thermal impact in the width direction of the steel sheet while maximizing the thermal impact in the thickness direction so shapes of the laser beams or quality thereof are not specifically limited.

The output of the laser beams of CO₂ that is the first laser beams may be preferably 200 to 2,000 W, and the output of the disk laser beams that is the second laser beams may be preferably 10 to 550 W. The output range of the respective laser beams indicates the laser output condition when the steel sheet progresses at the speed of 15mpm, and it is preferable to optimally control the output value of the respective laser beams by considering the incident energy density according to the speed of progressing the steel sheet.

Irradiation intervals of the overlapping laser beams 20 and 20' are preferably 2 to 7 mm. When the irradiation interval of the overlapping laser beams 20 and 20' irradiated on the surface of the steel sheet is too narrow, less than 2 mm, the effect of the heat-affected zone becomes large, resulting in inferior magnetic flux density and iron loss, and when the irradiation interval is 7 mm or more, the thermal impact effect required to secure the magnetic domain refining effect is reduced, making it difficult to achieve the effect.

It is preferable to scan the overlapping laser beams to be inclined as equal to or less than ±10° in a direction perpendicular to the rolling direction. When the overlapping laser beams are irradiated at an angle greater than the above-noted inclined angle, the desired magnetic domain refine effect may not be obtained.

When the progressing speed increases to be equal to the progressing speed of the steel sheet, the scanning speed of the overlapping laser beams must increase, so it is preferably 1 to 300 m/sec, and it represents the value given in the condition of 15mpm.

A method for manufacturing a grain-oriented electrical steel sheet and a method for refining a magnetic domain according to an embodiment of the present disclosure will now be described in detail.

To manufacture the grain-oriented electrical steel sheet, a slab of an electrical steel sheet material is first manufactured. A chemical composition and a metal structure of the slab are not specifically limited as long as a magnetization axis is aligned in a predetermined direction and functions as the electrical steel sheet. To give an example, the chemical composition of the slab is as follows. That is, the chemical composition of the slab is as follows in mass %: C: 0.08% or less (excluding 0%), Si: 1.0 to 6.5%, Mn: 0.005 to 3.0%, (a sum of at least one of Nb, V, and Ti); 0.070% or less, (a sum of at least one of Cr, Sn, and Sb): 2.5% or less, Al: 2.0% or less (excluding 0%), (a sum of at least one of P and S): 0.100% or less (excluding 0%), (a sum of Cu and Sn): 1.0% or less, rare-earth elements and other impurities totaling 0.2% or less, and the remainder is Fe.

In an embodiment of the present disclosure, an addition of other elements is not excluded as well as the above-noted alloy component, and they may be included in various ways within a range that does not harm the technical idea of the present disclosure. When additional elements are included, they are included to replace the remainder, Fe.

The steel sheet having this composition is manufactured into a slab by continuous casting, is then heated using a conventional method to perform hot rolling, and if necessary, hot rolled plate annealing is selectively performed, and is followed by cold rolling to manufacture the same with the thickness of 0.1 to 0.5 mm. The cold rolling may be performed once, or may be performed twice or more with annealing therebetween.

The manufactured cold rolled steel sheet undergoes primary recrystallization annealing through simultaneous decarburization and nitrification, or decarburization followed by nitrification. When the primary recrystallization annealing is performed by simultaneous decarburization and nitrification, the structure of the cold rolling deformed during the annealing process undergoes decarburization and annealing including primary recrystallization. For this purpose, it is carried out in a mixed gas atmosphere including nitrogen, hydrogen, and moisture. In the case of nitrification after decarburization, a nitriding treatment may be performed using ammonia gas to introduce nitrogen ions into the steel sheet after decarburization.

When the simultaneous decarburization and nitrification is performed, the cold rolled steel sheet loaded into a furnace is heated to 700 to 900 °C, the dew point temperature of the atmosphere gas is set to 40 to 70 °C, and a ratio of Fe₂SiO₄/SiO₂ on the surface is controlled to 0.5 to 3.0 to form an oxide layer on the surface of the electrical steel sheet.

An annealing separator based on MgO is applied to the surface of the steel sheet where primary recrystallization is completed, and the temperature is raised to 1,000°C or higher to cause secondary recrystallization through long-term soak annealing and thus form texture of the Goss orientation in which a {110} plane of the steel sheet is parallel to the rolling plane and a <001> direction is parallel to the rolling direction.

By the final high-temperature annealing process, the glass coating film including forsterite is formed on the surface of the steel sheet, and secondary recrystallization is formed on the inside of the steel sheet.

In this way, the steel sheet on which secondary recrystallization is performed is coated with an insulating coating liquid including colloidal silica, metal phosphate, or a composite thereof, and is then annealed to form an insulating coating layer on the surface of the electrical steel sheet on which a glass coating layer is formed.

The method for forming an insulating coating layer may be used without any particular limitation, and for example, the insulating coating layer may be formed by applying an insulating coating liquid including phosphate. It is preferable to use an insulating coating liquid including colloidal silica and metal phosphate. At this time, the metal phosphate may be Al phosphate, Mg phosphate, or a combination thereof, and the content of Al, Mg, or a combination thereof with respect to the weight of the insulating coating liquid may be 15 wt% or more.

By the process as described above, the surface of the electrical steel sheet on which a glass coating film and an insulating film are sequentially formed is simultaneously irradiated with the laser beams 20 and 20' in which the first laser beams A and A' overlap the second laser beams B and B', thereby forming the linear deformed portion 10 on the surface of the steel sheet.

The electrical steel sheet may be irradiated with overlapping laser beams while moving at a constant speed.

The irradiation angle of the overlapping laser beams, the quality of the laser beams used, and the types of laser modes are as described above, so detailed descriptions thereof will be omitted.

The present disclosure will now be described in more detail according to specific embodiments. However, the embodiments are only intended to illustrate the present disclosure, and the present disclosure is not limited thereto.

### Experimental Example

A cold-rolled steel sheet with the thickness of 0.23 mm is manufactured by using a slab having the composition shown in Table 1 and sequentially performing hot rolling and cold rolling. In Table 1, an element % represents wt%.

**(Table 1)**

| C (%) | Si (%) | Mn (%) | Cr (%) | Sn (%) | Sb (%) | Al (%) | Remainder |
|---|---|---|---|---|---|---|---|
| 0.06 | 3.515 | 0.100 | 0.116 | 0.0700 | 0.020 | 0.002 | Fe |

The cold-rolled steel sheets are maintained at 845°C for 160 seconds in a humid mixed gas atmosphere (the dew point temperature is controlled at 68°C, and the ratio of Fe2SiO4/SiO2 is controlled to 1.2) of hydrogen, nitrogen, and ammonia, and decarburization annealing including primary recrystallization annealing and a nitrification treatment are performed.

The annealing separator including MgO is applied to the surface of the steel sheet that had undergone primary recrystallization, and final high-temperature annealing is performed. The final high-temperature annealing is performed in a mixed atmosphere of 25 volume% of nitrogen and 75 volume % of hydrogen up to 1,200°C, and after reaching 1,200°C, it is maintained in the atmosphere of 100 volume% of hydrogen for approximately 8 hours and is then cooled.

A coating solution including a mixture of colloidal silica particles and metal phosphate is applied to the surface of the steel sheet that had completed secondary recrystallization annealing through the final high-temperature annealing process and is hardened by heat treatment at 880 °C for 50 seconds, and the tension of the steel sheet in the furnace is maintained at 3.1 MPa or less. By the above-noted process, the grain-oriented electrical steel sheet is manufactured in which a forsterite layer and an insulating coating layer are sequentially formed on the surface of the steel sheet.

The laser beams 20 in which the first laser beams of CO₂ overlap the second laser beams (or disk laser beams) are simultaneously irradiated on the surface of the steel sheet to form a linear deformed portion 10 on the surface.

The irradiation interval of the overlapping laser beams 20 irradiated on the surface of the steel sheet is changed in the range of 2.0 to 7.0 mm, and the linear deformed portion 10 is formed on the surface of the steel sheet in a direction crossing the rolling direction.

The laser beams used in refining a magnetic domain use the laser beams of CO₂ of 150 to 3.0 kW as the first laser beams A and the disk laser beams with the output of 40 to 550 W as the second laser beams B. The scanning speed of the overlapping laser beams 20 is varied in the range of 5 to 150 m/s, and the irradiation angle is given as equal to or less than 1°.

Table 2 shows test conditions and measured magnetism values for the steel sheet with the thickness of 0.23 mm. Referring to Table 2, the iron loss improvement rate of W15/50 and the coercive force improvement rate represent the iron loss and coercive force improvement ratios for the magnetic domain-treated specimens compared to the original plate.

**(Table 2)**

| Categ | | | | Test conditions | Scan | Iron loss W15/50 | Coercive force Hc at | Re- | | | | |
|---|---|---|---|---|---|---|---|---|---|---|---|---|
| ories | | | | | spee ds (m/se c) | (W/kg) | | | 1.7T,50Hz (A/m) | | | solidificat ion layer formed states |
| | Irra diati on type s | Disk outpu ts (W) | CO₂ outpu ts (W) | rradia tion gaps (mm) | | Before irradiat ion | After irradia tion | Iron loss improv ement rates (%) | Befo re irradi ation | After irradia tion | Coercive force improve ment rates (%) | |
| Test 1 | Ove rlap ping | 75 | 350 | 2.0 | 20.0 | 0.572 | 0.530 | 7.3 | 18.1 | 16.1 | 11.0 | ⊚ |
| Test 2 | | 75 | 350 | 3.0 | 13.3 | 0.572 | 0.525 | 8.2 | 18.2 | 15.6 | 14.3 | ⊚ |
| Test 3 | | 75 | 350 | 4.0 | 13.4 | 0.571 | 0.520 | 8.9 | 18.0 | 15.3 | 15.0 | ⊚ |
| Test 4 | | 75 | 350 | 5.0 | 10.7 | 0.572 | 0.503 | 12.1 | 18.2 | 15.2 | 16.5 | ⊚ |
| Test 5 | | 75 | 350 | 6.0 | 8.9 | 0.571 | 0.501 | 12.3 | 18.1 | 15.5 | 14.4 | ⊚ |
| Test 6 | | 75 | 350 | 7.0 | 7.7 | 0.57 | 0.511 | 10.4 | 18.1 | 15.6 | 13.8 | ⊚ |
| Test 7 | | 100 | 1000 | 5.0 | 30.7 | 0.571 | 0.502 | 12.1 | 18.1 | 15.1 | 16.6 | ⊚ |
| Test 8 | | 200 | 1000 | 5.0 | 34.7 | 0.572 | 0.503 | 12.1 | 18.0 | 15.1 | 16.1 | ⊚ |
| Test 9 | | 300 | 1500 | 5.0 | 46.4 | 0.572 | 0.501 | 12.4 | 18.0 | 15.1 | 16.4 | ⊚ |
| Test 10 | | 350 | 1500 | 5.0 | 50.4 | 0.572 | 0.503 | 12.1 | 18.1 | 15.1 | 16.6 | ⊚ |
| Test 11 | | 400 | 2000 | 5.0 | 61.5 | 0.572 | 0.502 | 12.2 | 18.1 | 15.0 | 17.1 | ⊚ |
| Test 12 | | 500 | 2000 | 5.0 | 64 | 0.572 | 0.505 | 11.7 | 18.2 | 15.0 | 17.4 | ⊚ |
| Test 13 | | 550 | 2000 | 5.0 | 69.3 | 0.572 | 0.502 | 12.2 | 18.0 | 15.0 | 16.4 | ⊚ |
| Comp arison 1 | Seq uent ial irra diati on | 75 | 350 | 5.0 | 10.7 | 0.572 | 0.552 | 3.5 | 18.0 | 17.0 | 5.6 | X |
| Comp arison 2 | O₂ only | - | 350 | 5.0 | 8.0 | 0.587 | 0.547 | 6.8 | 18.1 | 16.5 | 8.8 | X |
| Comp arison 3 | | - | 500 | 5.0 | 10.7 | 0.578 | 0.553 | 4.3 | 18.1 | 16.6 | 8.3 | X |
| Comp arison 4 | | - | 1000 | 5.0 | 32.0 | 0.575 | 0.557 | 3.1 | 18.0 | 16.6 | 7.8 | X |
| Comp arison 5 | | - | 1500 | 5.0 | 48.0 | 0.572 | 0.554 | 3.1 | 17.9 | 16.7 | 6.7 | X |
| Comp arison 6 | | - | 2000 | 5.0 | 64.0 | 0.572 | 0.552 | 3.5 | 17.9 | 16.7 | 6.7 | X |
| Comp arison 7 | Disk only | 75 | - | 5.0 | 10.0 | 0.575 | 0.540 | 6.1 | 18.1 | 16.5 | 8.8 | X |
| Comp arison 8 | | 100 | - | 5.0 | 20.0 | 0.571 | 0.542 | 5.1 | 18.0 | 16.5 | 8.3 | X |
| Comp arison 9 | | 200 | - | 5.0 | 38.4 | 0.572 | 0.544 | 4.9 | 18.1 | 16.6 | 8.3 | X |
| Comp arison 10 | | 300 | - | 5.0 | 56.8 | 0.571 | 0.541 | 5.3 | 18.0 | 16.4 | 8.9 | X |
| Comp arison 11 | | 400 | - | 5.0 | 76.0 | 0.568 | 0.543 | 4.4 | 18.1 | 16.5 | 8.8 | X |
| Comp arison 12 | | 500 | - | 5.0 | 95.2 | 0.571 | 0.547 | 4.2 | 18.0 | 16.6 | 7.8 | X |
| Comp arison 13 | | 550 | - | 5.0 | 104.0 | 0.572 | 0.546 | 4.5 | 18.1 | 16.6 | 8.3 | X |

**When a** linear deformed portion exists after irradiation of laser beams, and a re-solidification layer is formed at either the front or rear boundary of the deformed portion, it is marked with "⊚", and when no re-solidification layer is formed, it is marked with "X".

**The** "sequential irradiation" method that is the method for irradiating laser beams of Comparison 1 in Table 2 includes: irradiating the laser beams of CO₂ that is first laser beams A; and irradiating the disk laser beams that is the second laser beams B on the position where the laser beams of CO₂ have passed through while a predetermined time lapses and the steel sheet of the irradiated portion is cooled to reach room temperature.

When the thickness of the steel sheet is 0.23 mm, the scan interval of the overlapping laser beams is 5 mm, and output values of respective laser beams are equal to each other, the iron loss improvement rate by the overlapping laser beams is 12.1% which indicates significant improvement compared to the improvement rate of 3.5% of the sequential irradiation in Comparison 1, the iron loss improvement rate of 6.8% of CO₂ only in Comparison 2, and the iron loss improvement rate of 6.1% of the disk only in Comparison 7, as may be seen in the test 4.

The case of Comparison 6 where the output value of the laser beams of CO₂ only is significantly increased to 2000 W from the output value (350 W) of the laser beams of CO₂ of the overlapping laser beams shows a lower iron loss improvement rate than those of Test 7 to Test 10 where the laser beams of CO₂ have small output values, and the case of Comparison 13 where the output of the disk laser beams is increased shows a lower iron loss improvement rate than those of Test 7 to Test 12.

When the thickness of the steel sheet is 0.23 mm and the scanning interval of the overlapping laser beams is changed in the range of 2 to 7 mm, it may be seen that the iron loss and the coercive force are greatly improved in the experimental examples where the overlapping laser beams according to the present disclosure are irradiated for respective scanning intervals.

In the case of Comparisons 2 to 6, which are CO₂ only, the iron loss improvement rate is very poor and the coercive force is also poor, despite the output (W; 350 to 2000) being within the range of the present disclosure.

In the case of Comparison 7 to Comparison 13, which are the disks only, the iron loss improvement rate is very poor and the coercive force is also poor for the outputs (W; 10 to 550) within the range of the present disclosure.

The "re-solidification layer" is formed according to an embodiment, whereas the "re-solidification layer" is not formed according to Comparative Example. It may be seen from these results that the iron loss improvement rate and the coercive force improvement rate increase when the "re-solidification layer" is formed.

The present disclosure is not limited to the embodiments and may be produced in various forms, and it will be understood by those skilled in the art to which the present disclosure pertains that embodiments of the present disclosure may be implemented in other specific forms without modifying the technical spirit or essential features of the present disclosure. Therefore, it should be understood that the aforementioned embodiments are illustrative in terms of all aspects and are not limited.

## Claims

1. A grain-oriented electrical steel sheet comprising;
an electrical steel sheet substrate; and
an insulating coating layer disposed on the electrical steel sheet substrate,
wherein at least one linear deformed portion is disposed on a surface of the insulating coating layer,
a re-solidification layer is formed on a position of one of front and rear boundaries of the deformed portion, and
P-concentration in the re-solidification layer is lower than P-concentration of a lower insulating coating layer on which a re-solidification layer is not formed in a thickness direction of the insulating coating layer.

2. The grain-oriented electrical steel sheet of claim 1, wherein
a position where P-concentration of the re-solidification layer starts being reduced is disposed by equal to or less than 15% of a thickness of an entire insulating coating layer from a surface of the insulating coating layer in a thickness direction of the insulating coating layer.

3. The grain-oriented electrical steel sheet of claim 1, wherein
the position where P-concentration of the re-solidification layer starts being reduced is disposed by equal to or less than 500 nm from a surface of the insulating coating layer in a thickness direction of the insulating coating layer.

4. The grain-oriented electrical steel sheet of claim 1, wherein
a width of a boundary where the re-solidification layer is formed is formed to be equal to or less than 10 µm on one of a front portion and a rear portion with respect to respective ends of the deformed portion.

5. The grain-oriented electrical steel sheet of claim 1, wherein
a glass coating layer is formed between the electrical steel sheet substrate and the insulating coating layer.

6. The grain-oriented electrical steel sheet of claim 1, wherein
an iron loss (or a magnetic domain material of W15/50) improvement rate of the electrical steel sheet is equal to or greater than 7 %.

7. The grain-oriented electrical steel sheet of claim 1, wherein
a coercive force improvement rate of the electrical steel sheet is equal to or greater than 11%.

8. A grain-oriented electrical steel sheet comprising:
an electrical steel sheet substrate; and
an insulating coating layer disposed on the electrical steel sheet substrate,
wherein at least one linear deformed portion is disposed on a surface of the insulating coating layer,
a re-solidification layer is formed on a position of one of upper and lower boundaries of the deformed portion, and
Si-concentration in the re-solidification layer is higher than Si-concentration of a lower insulating coating layer on which a re-solidification layer is not formed in a thickness direction of the insulating coating layer.

9. The grain-oriented electrical steel sheet of claim 8, wherein
P-concentration in the re-solidification layer is lower than P-concentration of a lower insulating coating layer on which a re-solidification layer is not formed.

10. The grain-oriented electrical steel sheet of claim 9, wherein
a position where P and Si-concentration of the re-solidification layer starts being changed is equal to or less than 15% of a thickness of an entire insulating coating layer from a surface of the insulating coating layer in a thickness direction of the insulating coating layer.

11. The grain-oriented electrical steel sheet of claim 8, wherein
an iron loss (W15/50) improvement rate of the electrical steel sheet is equal to or greater than 7 %.

12. The grain-oriented electrical steel sheet of claim 8, wherein
a coercive force improvement rate of the electrical steel sheet is equal to or greater than 11%.

13. A method for refining a magnetic domain of a grain-oriented electrical steel sheet comprising:
a first beam spot formed by irradiating first laser beams with a first wavelength; and
a second beam spot formed by irradiating second laser beams with a second wavelength,
wherein overlapping laser beams formed to control a width of the second beam spot to be disposed within a width of the first beam spot on a surface of an electrical steel sheet with respect to a progressing direction of the electrical steel sheet are irradiated on the surface of the electrical steel sheet to form a deformed portion.

14. The method of claim 13, wherein
the first laser beams are laser beams of CO₂, and the second laser beams are disk laser beams.

15. The method of claim 14, wherein
the disk laser beams that is the second laser beams are longer or shorter than the laser beam of CO₂ that is the first laser beams with respect to the width direction of the electrical steel sheet.

16. The method of claim 14, wherein
the laser beam of CO₂ that is the first laser beams and the disk laser beams that is the second laser beams are irradiated by a laser beam scanning device through a shared optical path.

17. The method of claim 14, wherein
the laser beam of CO₂ that is the first laser beams and the disk laser beams that is the second laser beams are respectively scanned by a laser beam scanning device, and the laser beams overlap each other on a surface of the electrical steel sheet.

18. The method of claim 14, wherein
a beam spot of the laser beams of CO₂ that is the first laser beams is an oval beam spot that has a width of 100 to 400 µm and a length of 0.4 to 20 mm.

19. The method of claim 14, wherein
a beam spot of the disk laser beams that is the second laser beams is an oval or circular beam spot which has a width of 10 to 200 µm and a length of equal to or less/greater than the length of the beam spot of the laser beams of CO₂ that is the first laser beams.

20. The method of claim 14, wherein
irradiation intervals of the overlapping laser beams are 2 to 7 mm, and scan speeds thereof are 1 to 300 m/sec.

21. The method of claim 14, wherein
an inclined direction of the overlapping laser beams is equal to or less than ±10°.

22. The method of claim 14, wherein
outputs of the laser beams of CO₂ that is the first laser beams is 200 to 2,000 W, and outputs of the disk laser beams that is the second laser beams is 10 to 550 W.
